# EUROPÄISCHE PATENTANMELDUNG

(11) **EP 4 644 140 A1**
(43) Veröffentlichungstag der Anmeldung: **05.11.2025**
(21) Anmeldenummer: 25174222.7
(22) Anmeldetag: 05.05.2025
(51) Int. Cl.: B60G 3/01, B60G 13/00

(54) **RADAUFHÄNGUNGSSYSTEM FÜR LASTFAHRZEUGE**

(30) Priorität: 03.05.2024 AT 503762024
(71) Anmelder: Motic GmbH, 1210 Wien (AT)
(72) Erfinder: Wiesinger, Fabio, 1180 Wien (AT); Hainberger, Clemens, 1210 Wien (AT); Berger, Semir, 1210 Wien (AT)
(74) Vertreter: Patentanwälte Barger, Piso & Partner

(57) **Zusammenfassung**

Radaufhängungssystem (19) für ein Lastenfahrzeug mit einem Radkasten (9), einer Radaufhängungsvorrichtung (8), für die Aufnahme einer Radachse (7), umfassend zumindest zwei Anschlussabschnitte (16), zumindest zwei Führungen (11), wobei die Führungen (11) mit dem Radkasten (9) verbunden sind, zumindest zwei Feder-Dämpfer-Einheiten (10), zumindest zwei Kolben-Zylinder-Einheiten (12), wobei zumindest eine Führung (11), eine Feder-Dämpfer-Einheit (10) und eine Kolben-Zylinder-Einheit (12) sich an zwei gegenüberliegenden Enden der Radaufhängungsvorrichtung (8) befinden und mit dieser verbunden sind. Um einerseits bei gegebener Fahrzeugbreite einen Ladebereich mit möglichst großer lichter Weite und anderseits eine Absenkbarkeit des Ladebereiches bis zum Boden zu gewährleisten, ist jedes Hinterrad (5) auf einer separaten, in einer sich in Längsrichtung des Lastenfahrzeugs erstreckenden Radaufhängungsvorrichtung (8) vorgesehenen und vom Ladebereich nach außen abstehenden Achse (7) gelagert, wobei die Radaufhängungsvorrichtung (8) in einem am Fahrzeugrahmen befestigten Radkasten (9) durch mindestens eine jeweils vor und hinter dem Hinterrad (5) - in Fahrtrichtung gesehen - vorgesehene Kombination aus Stoßdämpfer (10) und Führung (11) höhenverstellbar untergebracht ist.

## Beschreibung

Die Erfindung bezieht sich auf ein Radaufhängungssystem für Lastfahrzeuge, sowie auf mit diesem Radaufhängungssystem ausgestattetes Lastenfahrzeug, mit einem vorderseitigen Lenkbereich und einem hinterseitigen Ladebereich und zumindest zwei Hinterrädern, die von einem Fahrzeugrahmen getragen sind und das erfindungsgemäße Radaufhängungssystem aufweisen.

Transport von Lasten, sei es im gewerblichen Einsatz oder im Alltag, stellt besondere Anforderungen an die Federung von Fahrzeugen. Während bei großen Lastkraftwagen bewährte Systeme wie Blattfedern und Luftfederungen zum Einsatz kommen, um hohe Zuladungen zu bewältigen und Fahrkomfort sowie Stabilität zu gewährleisten, stehen Lastenfahrräder aufgrund ihres begrenzten Bauraums vor spezifischen Herausforderungen.

Feder-Dämpfersysteme in Lastfahrzeugen haben die Hauptaufgaben, die Verbindung zwischen Rädern und Fahrgestell herzustellen, Stöße und Vibrationen von der Straße zu absorbieren, die Bodenhaftung der Räder zu optimieren und die Stabilität des Fahrzeugs, insbesondere bei unterschiedlicher Beladung, sicherzustellen. Dies dient dem Schutz der Ladung, dem Komfort des Fahrers und nicht zuletzt der Fahrsicherheit.

Gängige Systeme bei größeren Lastfahrzeugen umfassen:
- **Blattfedern:** Eine traditionelle und robuste Lösung, die aus mehreren übereinander geschichteten Stahlfedern besteht. Sie sind langlebig und können hohe Lasten tragen, bieten aber oft weniger Fahrkomfort und sind schwer.
- **Luftfederungen:** Diese Systeme nutzen Luftsäcke anstelle von Stahlfedern. Sie ermöglichen eine automatische Nivellierung unabhängig von der Last, bieten einen besseren Fahrkomfort und schonen die Ladung. Sie sind jedoch komplexer und wartungsintensiver als Blattfedern.
- **Schraubenfedern:** Werden häufig in leichteren Nutzfahrzeugen oder in Kombination mit anderen Systemen eingesetzt.
- **Torsionsstäbe:** Diese verdrehen sich unter Last und dienen als Federungselement. Sie ermöglichen eine kompakte Bauweise, finden sich aber seltener in schweren Lastfahrzeugen.

Die Wahl des Systems hängt maßgeblich von der Art des Fahrzeugs, der zu transportierenden Last und den Einsatzbedingungen ab.

Lastenfahrräder zeichnen sich durch ihre im Vergleich zu LKW deutlich geringere Breite aus, was beim Design von Federungssystemen eine zentrale Rolle spielt. Der vorhandene Bauraum muss effizient genutzt werden, um Federweg und Dämpfung zu ermöglichen, ohne die Gesamtbreite des Fahrrads unnötig zu vergrößern oder die Ladefläche einzuschränken. Die Lösungsansätze variieren je nach Typ des Lastenrads (zweirädrig, dreirädrig, Frontlader, Longtail).

Bei Longtail-Lastenrädern, bei denen sich die Ladefläche hinter dem Fahrer über dem verlängerten Hinterradbereich befindet, kann eine Hinterradfederung implementiert werden. Hier kommen oft ähnliche Systeme wie bei Mountainbikes zum Einsatz, allerdings angepasst an die höhere Zuladung. Um die Breite gering zu halten, werden Hinterbaudämpfer oft zentral im Rahmen positioniert oder so in die Hinterradschwinge integriert, dass sie nicht über die Reifenbreite hinausragen. Eingelenkerschwingen oder Viergelenkerschwingen mit kompakter Kinematik sind hier denkbar. Die Herausforderung besteht darin, eine effektive Federung bei gleichzeitig hoher Seitensteifigkeit für Stabilität unter Last zu gewährleisten.

Ähnliche Probleme treten bei Pritschenwagen etc. auf. Derlei Fahrzeuge werden vielfach für gewerbliche Gütertransporte auf kurzen Strecken, z.B. auf Firmengeländen, in Lagerhallen oder auf Fahrradwegen und Straßen im städtischen Bereich, sogenannte Last-Mile-Transporte, eingesetzt. Sie sollen dabei möglichst schmal und wendig sein, gleichzeitig aber ein großes Fassungsvermögen aufweisen. Ein Grund ist das begrenzte Platzangebot in den genannten Einsatzgebieten. Für eine Fahrradwegtauglichkeit darf etwa die Maximalbreite aufgrund gesetzlicher Bestimmungen häufig 1 m nicht überschreiten (z.B. österreichische StVO). Dies schränkt die mögliche Breite des Ladebereiches - sofern er sich zwischen den Hinterrädern befindet - stark ein. Soll etwa eine Europalette, deren Breite 80 cm beträgt (siehe EN 13698), transportiert werden, steht für den Radkasten samt Radaufhängung auf beiden Fahrzeugseiten jeweils nur eine Breite von maximal 10 cm zur Verfügung. Unter diesen Bedingungen kommt es auch zu Herausforderungen mit der Festigkeit / Stabilität der Radaufhängung, falls eine hohe Nutzlast transportiert werden soll. Dies konnte und kann mit den bislang bekannten Radaufhängungen (z.B. Mehrlenker-, Querlenker- oder Federbeinaufhängung) nicht bewerkstelligt werden. Außerdem ermöglichen die bekannten Hinterradaufhängungen keine ausreichende Absenkung des Ladebereichs, um ohne weitere Maßnahmen oder Hilfsmittel (z.B. Rampen, Hebegeräte) Transportgüter zu laden oder zu entladen. Es gab daher immer wieder Bestrebungen eine Lösung für diese Probleme zu finden

Die US 2 644 696 A zeigt etwa eine höhenverstellbares Radaufhängungssystem für ein Lastenfahrzeug mit Lastenbett, der innerhalb eines Radkastens ("wheel housing") montiert ist. Dabei ist die hydraulische Höhenverstellung in eine Kombination aus Federbein mit Führung integriert. Für jedes Hinterrad ist ein eigenes Radaufhängungssystem getrennt vom gegenüberliegenden Rad ausgeführt, um den Laderaum zwischen den Hinterrädern nicht weiter einzuschränken. Nachteilig an dieser Lösung ist, dass sie zu einer erhöhten Abnutzung der Bauteile führt. Hinzu kommen erhebliche Reibungskräfte, die durch Schwingungen in Verbindung mit Fahrbahnverhältnissen entstehen. Weitere Nachteile der Ausführung sind hohe Biege- und Torsionsmomente, sowie die Gefahr des Verkantens der Teleskopstangen.

Ziel der gegenständlichen Erfindung ist es daher, ein neuartiges Hinterradaufhängungssystem sowie ein Lastenfahrzeug mit darin verbautem Radaufhängungssystem bereitzustellen, die diese Nachteile nicht aufweist, also möglichst schmal ist, eine hohe Festigkeit aufweist und ein Absenken des Ladebereiches bis zum Boden ermöglicht. Zudem soll das System auch über eine passende Dämpfung verfügen.

Dieses Ziel wird mit einem Radaufhängungssystem sowie einem Lastenfahrzeug der eingangs genannten Art erfindungsgemäß dadurch erreicht, dass jedes der zumindest zwei Hinterräder auf einer separaten Radaufhängungsvorrichtung vorgesehenen und vom Ladebereich nach außen abstehenden Achse gelagert ist, wobei das Radaufhängungssystem in einem am Fahrzeugrahmen befestigten Radkasten durch mindestens eine - in Fahrtrichtung gesehen - jeweils vor und hinter dem Hinterrad vorgesehene Kombination aus Stoßdämpfer und Führung höhenverstellbar untergebracht ist und wobei die Radaufhängungsvorrichtung an jeder der beiden Führungen der Radaufhängung angreift und so ein mechanische Verbindung zwischen beiden Führungen herstellt, die eine Übertragung der Biegemomente von einer Führung auf die andere Führung gestattet.

Die Erfindung wird im Folgenden anhand der gezeigten Figuren näher erläutert, Dabei zeigt:
Fig. 1 ein erfindungsgemäßes Radaufhängungssystem in Seitenansicht von außen auf die Radachse,
Fig. 2 ein erfindungsgemäßes Radaufhängungssystem gem. Fig. 1 in isometrischer Ansicht von unten und außen,
Fig. 3 ein erfindungsgemäßes Radaufhängungssystem gem. Fig. 1 in isometrischer Ansicht von unten und außen mit abgenommenem Rad,
Fig. 4 ein erfindungsgemäßes Radaufhängungssystem gem. Fig. 1 in isometrischer Ansicht von oben und innen,
Fig. 5 ein erfindungsgemäßes Radaufhängungssystem mit einer zu Fig. 1-4 alternativen Radaufhängungsvorrichtung in verbauter Ansicht,
Fig. 6 ein erfindungsgemäßes Radaufhängungssystem gem. Fig. 5 in Seitenansicht von außen auf die Radachse bei abgenommenem Rad,
Fig. 7 die in Fig. 5 & 6 verbaute Radaufhängungsvorrichtung
Fig. 8 ein erfindungsgemäßes Lastenfahrzeug in Seitenansicht,
Fig. 9 ein erfindungsgemäßes Lastenfahrzeug in isometrischer Vorderansicht,
Fig. 10 ein erfindungsgemäßes Lastenfahrzeug in isometrischer Rückansicht,
Fig. 11 ein erfindungsgemäßes Lastenfahrzeug mit abgesenktem Ladebereich in Seitenansicht.

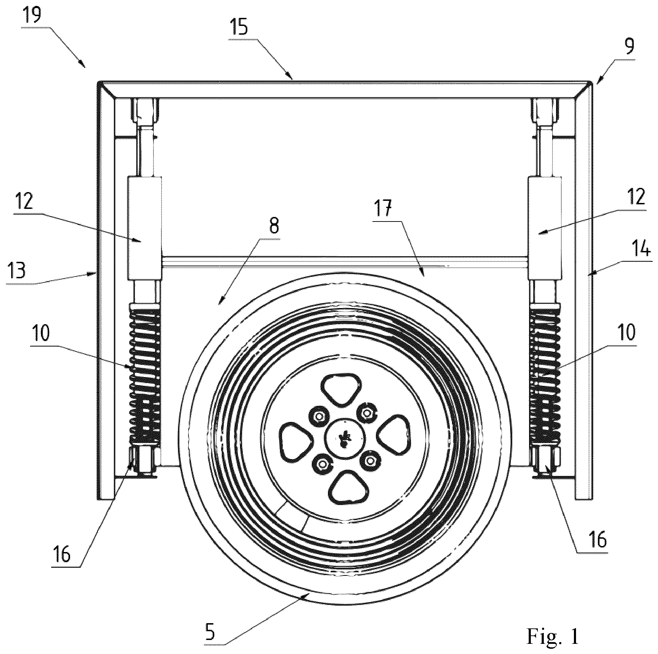

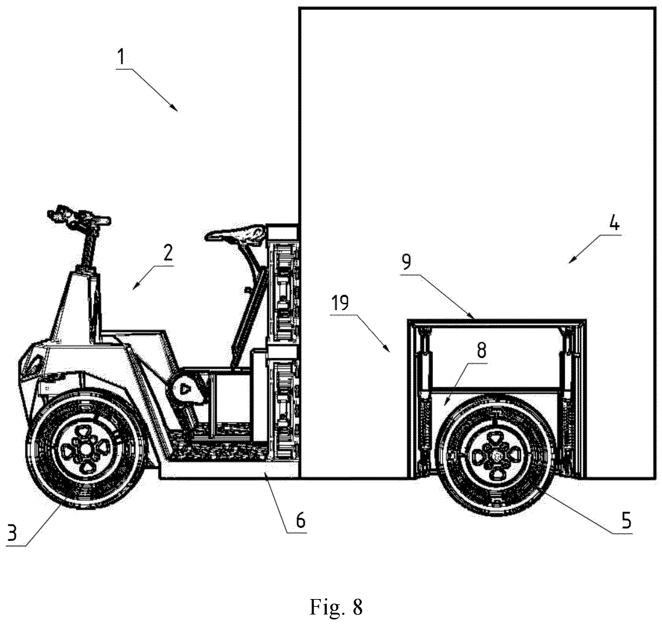

Fig. 1 zeigt ein erfindungsgemäßes Radaufhängungssystem 19 in Ansicht von seitlich und außen auf ein Hinterrad 5 mit Radachse 7, umfassend eine Radaufhängungsvorrichtung 8, je Seite eine Feder-Dämpfer-Einheit 10, je Seite eine Führung 11, je Seite eine Kolben-Zylinder-Einheit 12, je Seite zumindest zwei Anschlussabschnitte 16, einen Radkasten 9, umfassend eine Vorderseite 13, eine Hinterseite 14 und eine Oberseite 15, wobei der Radkasten 9 mit einem Ladebereich 4 (siehe Fig. 8 bis 11) verbunden ist. Darüber hinaus kann die Radaufhängungsvorrichtung 8 über Verstärkungsrippen 17 verfügen. Das Rad 5 ist dabei über die Achse 7 mit der Radaufhängungsvorrichtung 8 verbunden. Die Radaufhängungsvorrichtung 8 wiederum ist über die Anschlussabschnitte 16, die im gezeigten Fall als Gleitlager ausgeführt sind, mit den Führungen 11 verbunden. Die Führungen 11 sind ihrerseits mit dem Radkasten 9 verbunden. Parallel zur Führung 11 ist, in Serie zueinander geschalten, also in axialer Richtung aneinander anschließend, das Feder-Dämpfer-Einheit 10 und die Kolben-Zylinder-Einheit 12 vorgesehen. Auf diese Weise lässt sich durch die Kolben-Zylinder-Einheit 12 die Radaufhängungsvorrichtung 8 entlang der Führungen 11 relativ zum Radkasten 9 auf und ab verschieben und damit der gesamte Ladebereich 4 anheben und absenken. Die Anschlussabschnitte 16 dienen dabei als Verbindung zwischen den Führungen 11 und ermöglichen einen Ausgleich der Biegemomente von den Führungen 11 zueinander. Ein weiterer großer Vorteil dieser Ausführungsform ist es, dass die Führungen 11 aus durchgehenden Stangen gebildet sind, womit kein Verkanten stattfinden kann, wie das bei den im Stand der Technik verwendeten Teleskopstangen passieren kann. Die Lösung bietet damit eine hohe Steifigkeit, einen minimalen Bauraum und löst das Problem des Verkantungsrisikos, während es trotzdem ein einfaches und effizientes Absenken des Ladebereichs 4 ermöglicht. Die Trennung des Feder-Dämpfer-Systems 10 von den Führungen 11 ermöglicht eine gezielte Kräfteaufteilung. Die Führungen 11 übernehmen die Biege- und Torsionsmomente, während das Feder-Dämpfer-Systems 10 ausschließlich Zug- und Druckbelastungen absorbiert. Diese Trennung ermöglicht eine schlankere Dimensionierung, wodurch das System schmaler ausfällt und mehr Ladefläche erhalten bleibt. Darüber hinaus bietet die gezeigte Erfindung ausreichend Platz für den Einbau moderner Scheibenbremsen, die bei hoher Beladungslast ein unerlässliches Feature darstellen. Da das Radaufhängungssystem 19 darüber hinaus mit Standardteilen auskommt, ist es einfach zu montieren und günstig in der Produktion. Es entsteht damit ein komplett unabhängiges Radsystem, das, etwa zusammen mit dem Radkasten 9, als zusammenhängender Baukasten verwendet und damit auch individuell getauscht werden kann. Jeder Feder-Dämpfer-Einheit 10 ist eine Kolben-Zylinder-Einheit 12 zugeordnet, die die Feder-Dämpfer-Einheit 10 axial verlängert und für das Absenken des Fahrzeugrahmens 6 verantwortlich ist.

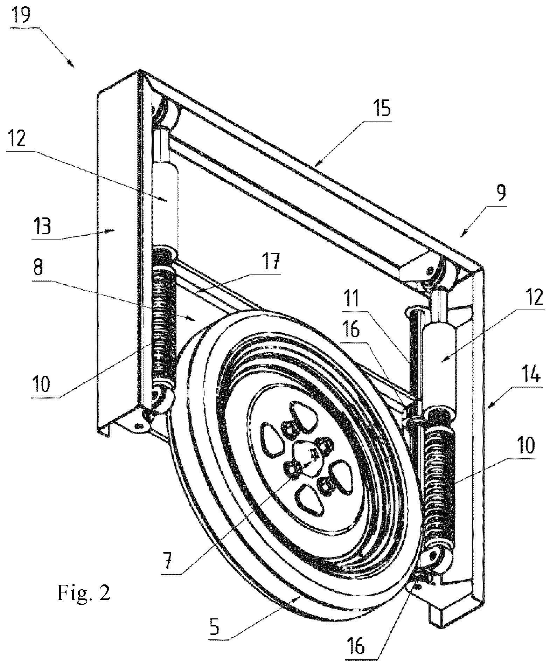

Fig. 2 zeigt das erfindungsgemäße Radaufhängungssystem 19 mit dem Radkasten 9 gem. Fig. 1 in isometrischer Ansicht von unten und außen.

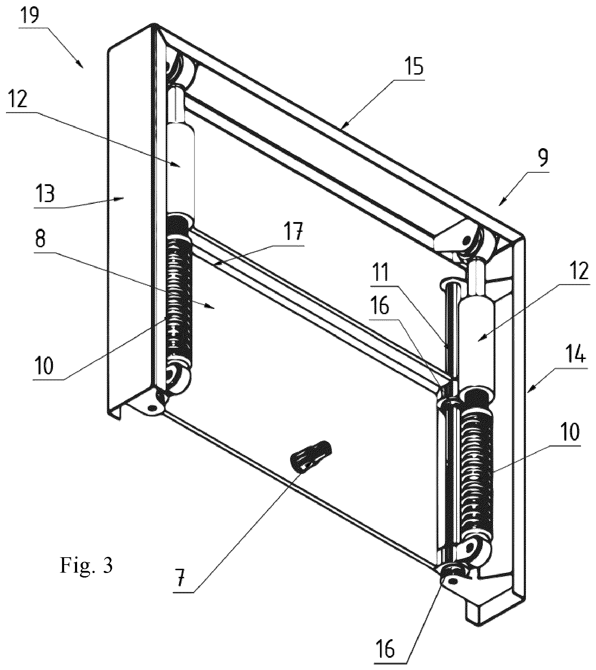

Fig. 3 zeigt das erfindungsgemäßes Radaufhängungssystem 19 mit dem Radkasten 9 gem. Fig. 1 & 2 in isometrischer Ansicht von unten und außen mit abgenommenem Rad. In dieser Ansicht sind besonders gut die Achse 7 und die Anschlussabschnitte 16 zu erkennen, die die Radaufhängungsvorrichtung 8 in Form von Gleitlagern mit den Führungen 11 verbinden. Die Verstärkungsrippe 17 begünstigt im Dargestellten Fall den Biegemomentausgleich zwischen den Führungen 11, indem sie der Radaufhängungsvorrichtung 8 zusätzliche Steifigkeit verleiht und so eine Wölbung der Radaufhängungsvorrichtung 8 verhindert. Wie der Fachperson bekannt ist können diese Verstärkungsrippen 17 unterschiedliche Formen annehmen und sowohl geformt sein als auch durch Addition von Material (z.B. durch Schweißen) aufgebracht sein.

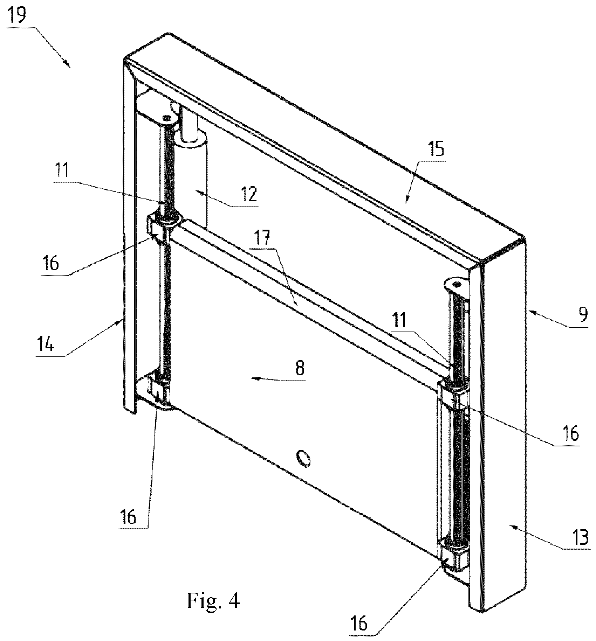

Fig. 4 zeigt das erfindungsgemäßes Radaufhängungssystem 19 mit dem Radkasten 9 gem. Fig. 1 & 2 in isometrischer Ansicht von oben und innen. Hier sind alle vier Anschlussabschnitte 16 zu erkennen, die die Radaufhängungsvorrichtung 8 in Form von Gleitlagern mit den Führungen 11 verbinden.

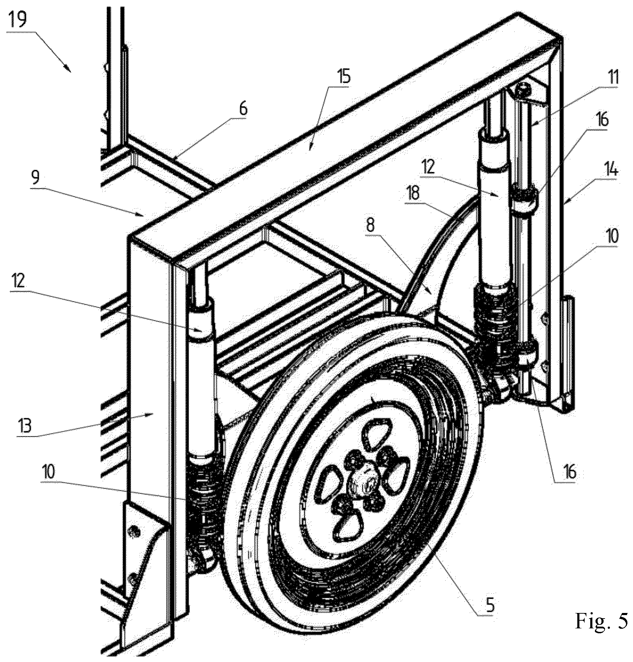

Fig. 5 zeigt ein erfindungsgemäßes Radaufhängungssystem 19 mit dem Radkasten 9 mit einer zu Fig. 1-4 alternativen Radaufhängungsvorrichtung 8 in verbauter Ansicht von schräg oben. Hier befinden sich die Führungen 11 und das System aus Feder-Dämpfer-Einheit 10 und Kolben-Zylinder-Einheit 12 nicht hintereinander, wie in Fig. 1-4, sondern nebeneinander. Einer der Vorteile dieser Anordnung ist die Möglichkeit einen noch kompakteren Bauraum zu erreichen. Ein weiterer Unterschied in einer zu Fig. 1-4 alternativen Radaufhängungsvorrichtung 8. Diese ist deutlich materialsparender und damit auch potenziell deutlich leichter als die Radaufhängungsvorrichtung 8 aus Fig. 1-4.

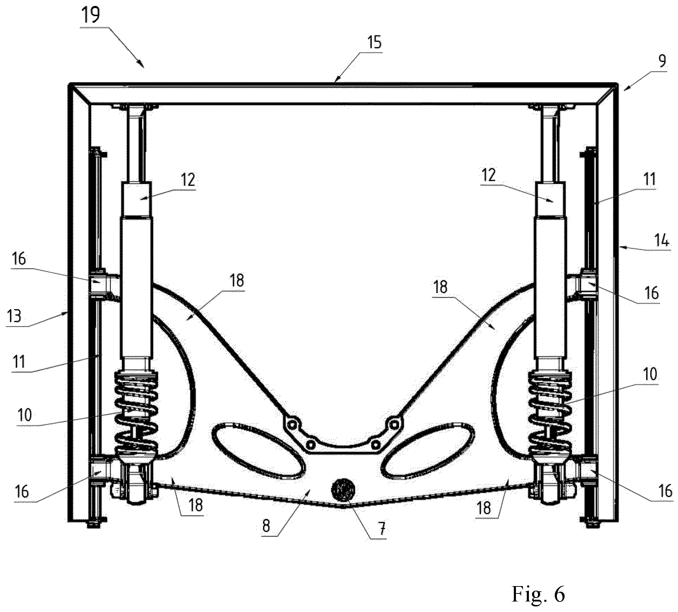

Fig. 6 zeigt ein erfindungsgemäßes Radaufhängungssystem 19 mit dem Radkasten 9 mit einer zu Fig. 1-4 alternativen Radaufhängungsvorrichtung 8 mit ihren Armen 18 in der Sicht von außen auf die Achse 7, ohne Rad 5. Gut zu erkennen sind hier die weiteren Ausnehmungen in Radaufhängungsvorrichtung 8, um eine weitere Gewichtseinsparung zu erreichen.

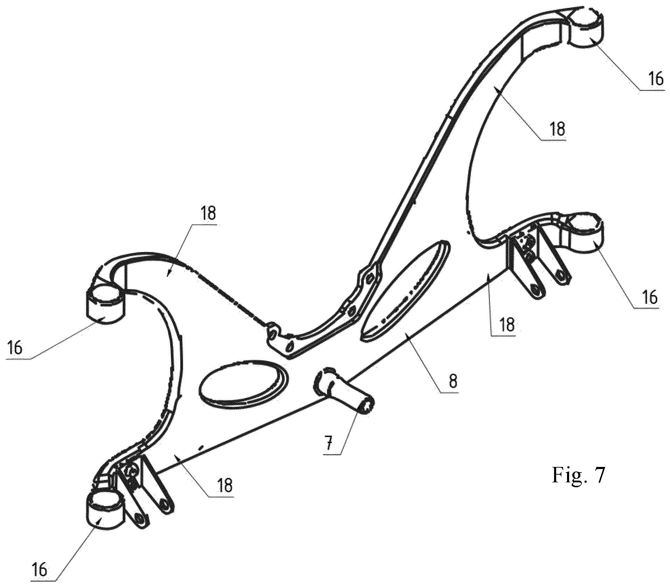

Fig. 7 zeigt die alternative Radaufhängungsvorrichtung 8 aus Fig. 5 & 6 in ausgebautem Zustand.

Fig. 8 zeigt ein erfindungsgemäßes Lastenfahrzeug 1, umfassend einen Lenkbereich 2, ein Vorderrad 3, einen Ladebereich 4, einen Fahrzeugrahmen 6 und dem Radaufhängungssystem 19 in isometrischer Vorderansicht.

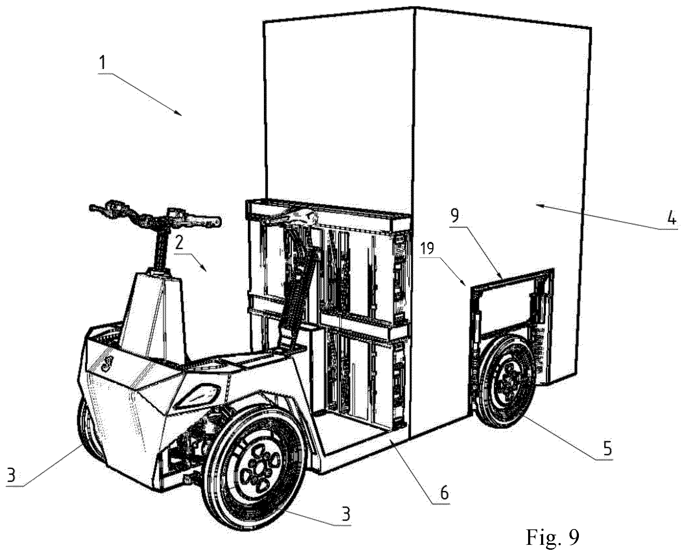

Fig. 9 ein erfindungsgemäßes Lastenfahrzeug 1 gemäß Fig. 8 in isometrischer Vorderansicht.

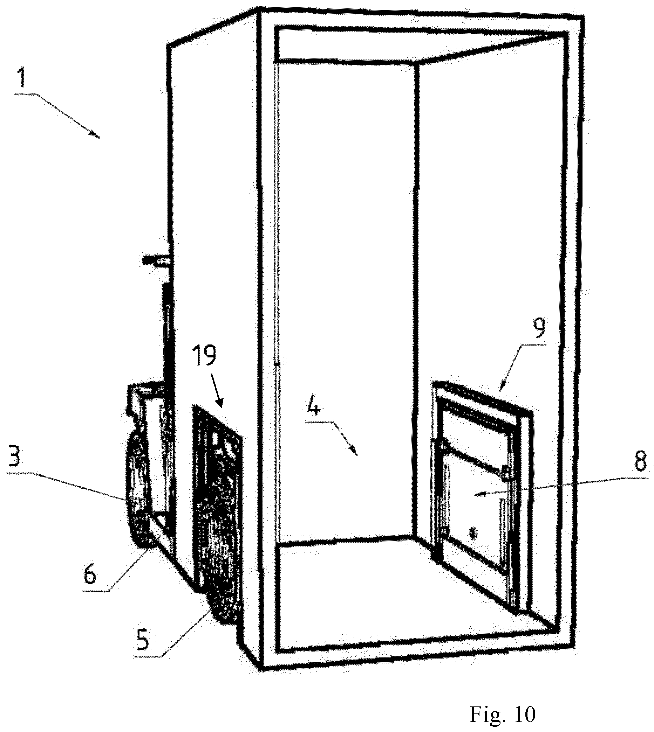

Fig. 10 zeigt ein erfindungsgemäßes Lastenfahrzeug 1 gemäß Fig. 8 & 9 in isometrischer Rückansicht mit offenem, abgesenktem Ladebereich 4.

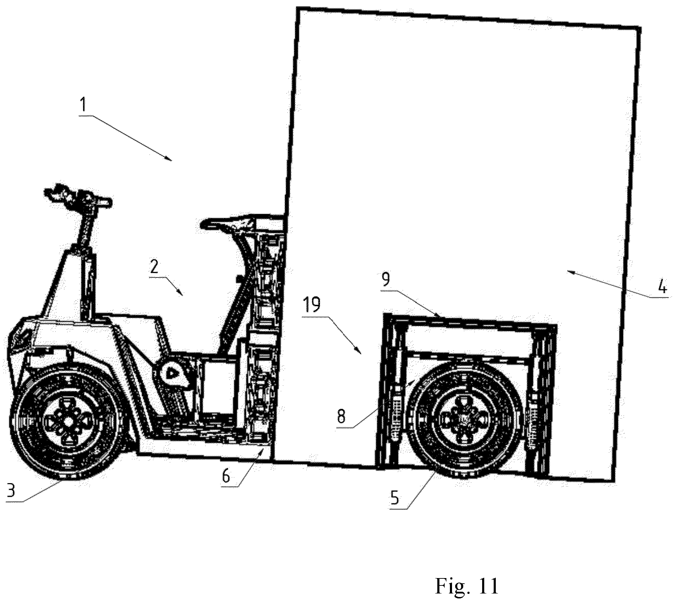

Fig. 11 zeigt ein erfindungsgemäßes Lastenfahrzeug 1 gemäß Fig. 8 bis 10 mit abgesenktem Ladebereich 4 in Seitenansicht.

Das erfindungsgemäße Lastenfahrzeug 1 in Form eines Lastenfahrrades gemäß den Fig. 8 bis 11 weist einen vorderseitigen Lenkbereich 2 und zwei Vorderräder 3 sowie einen hinterseitigen Ladebereich 4 und zwei Hinterräder 5 auf, die von einem Fahrzeugrahmen 6 getragen sind. Der Lenkbereich 2 ist in bekannter Weise ausgestaltet, z.B. Elektroantrieb mit Batterien, Fahrersitz mit Generator und Trittunterstützung usw. Es wäre theoretisch denkbar auch mehr als zwei Hinterräder vorzusehen, jedoch erhöht sich dadurch der Konstruktions- und Produktionsaufwand des Lastenfahrzeugs 1 erheblich.

Die in den Fig. 8 bis 11 veranschaulichte, erfindungsgemäße Hinterradaufhängung ist in den Fig. 1 bis 7 vergrößert dargestellt. Jedes Hinterrad 5 ist auf einer separaten, vom Ladebereich 4 nach außen abstehenden Achse 7 gelagert. Diese ist in einer sich in Längsrichtung des Lastenfahrrads 1 erstreckenden Radaufhängungsvorrichtung 8 verankert. Die Radaufhängungsvorrichtung 8 befindet sich in einem Radkasten 9, der am Fahrzeugrahmen 6 oder Ladebereich 4 befestigt ist. Sie ist vor und hinter dem Hinterrad 5 - in Fahrtrichtung gesehen - durch eine Kombination aus separatem Feder-Dämpfer-Systemen 10 und separaten Führungen 11 im Radkasten 9 abgestützt. Im Bedarfsfall können mehrere Feder-Dämpfer- Systeme 10 und Führungen 11 nebeneinander vorgesehen sein. Die Radaufhängungsvorrichtung 8 ist mittels, an den Feder-Dämpfer-Systemen 10 befestigten Kolben-Zylinder-Einheiten 12, höhenverstellbar; es kann aber jede andere geeignete Höhenverstellbarkeit vorgesehen sein. Da die Hinterräder 5 seitlich des Ladebereiches 4 angeordnet sind, kann dieser bis zum Boden abgesenkt werden (wie in Fig. 10 und 11 veranschaulicht), sodass keine Ladehilfsmittel (Rampen, Hebegeräte etc.) beim Be- und Entladen erforderlich sind.

Der Radkasten 9 weist eine Vorderseite 13 und eine Hinterseite 14 - in Fahrtrichtung gesehen - sowie eine Oberseite 15 auf. Die Feder-Dämpfer-Systeme 10 sind im gezeigten Fall an der Oberseite 15 abgestützt, die Führungen 11 an der Vorderseite 13 und an der Hinterseite 14 befestigt. Falls einstückige Kombinationen aus Stoßdämpfer und Führung in Form von Teleskopdämpfern (nicht dargestellt) verwendet werden sollten, sind diese an der Oberseite 15 des Radkasten 9 abzustützen, wobei die Höhenverstellbarkeit des Ladebereiches 4 durch Kolben-Zylinder-Einheiten 12 gewährleistet sein kann.

Die Kombinationen aus Feder-Dämpfer-System 10 und Führung 11 sind im Fall der Fig. 1 bis 4 fluchtend mit dem Hinterrad 5 angeordnet. Dies ist bei der Ausführungsform gemäß den Fig. 1 und 8 am deutlichsten aus Fig. 2, bei der Ausführungsform gemäß den Fig. 5 bis 7 aus Fig. 5 ersichtlich. Gemäß Fig. 2 ist jede Führung 11 - quer zur Fahrtrichtung gesehen - neben dem zugehörigen Feder-Dämpfer-System 10 nächst dem Ladebereich 4, also bezüglich der Feder-Dämpfer-Systeme 10 gegenüberliegender Fahrzeugseiten innenliegend, angeordnet. Gemäß Fig. 5 ist jede Führung 11 - in Fahrtrichtung gesehen - auf der dem Hinterrad 5 abgekehrten Seite des zugehörigen Feder-Dämpfer-System 10, also bezüglich der Feder-Dämpfer-System 10 auf ein und derselben Fahrzeugseite außenliegend, angeordnet.

In den dargestellten Ausführungsbeispielen ist jede Führung 11 als Stange ausgebildet. Jede Radaufhängung 8 weist wenigstens einen Anschlussabschnitt 16 pro Führung 11 auf. In den dargestellten Beispielen sind pro Führung 11 zwei längs der Führung 11 voneinander distanzierte Anschlussabschnitte 16 vorgesehen, welche die Stange ringförmig umgreifen.

Anstelle der Stange kann jede Führung 11 auch als Profilschiene (nicht dargestellt) mit hinterschnittener Nut ausgebildet sein, in die jeweils wenigstens ein Anschlussabschnitt der Radaufhängung mit angepasstem Nutenprofil eingreift. Das Nutenprofil kann dabei z.B. T-, trapez- oder schwalbenschwanzförmig sein.

Bei der Ausführungsform der Fig. 1 bis 4 ist die Radaufhängungsvorrichtung 8 als flache Platte ausgeführt, die zwecks Gewichtsreduzierung auch mit Ausnehmungen versehen sein kann. Oberhalb der in ihr verankerten Achse 7 des Hinterrads 5 ist ihre Längsseite mit einer Verstärkungsrippe 17 versehen (am deutlichsten in Fig. 3 ersichtlich), die zur Aufnahme von Biegebelastungen dient. Auf der Vorder- und Hinterseite - in Fahrtrichtung gesehen - der Radaufhängungsvorrichtung 8 sind in Höhenrichtung übereinander je zwei Anschlussabschnitte 16 vorgesehen, welche die jeweilige, als Stange ausgeführte Führung 11 umgreifen. Es ist auch möglich nur einen Anschlussabschnitt 16 je Führung 11 vorzusehen, der sich über die gesamte Höhe der Radaufhängungsvorrichtung 8 erstreckt. Diese Ausführung stellt aber eine komplizierte Version dar und ist daher im Allgemeinen weniger vorteilhaft. Wichtig ist aber insbesondere, dass am oberen und unteren Ende der Radaufhängungsvorrichtung 8 Anschlussabschnitte (üblicherweise in Form eines Gleitlagers) vorgesehen sind, wie in Fig. 1 bis 4 zu sehen, da nur so ein Verkanten der Radaufhängungsvorrichtung 8 gegenüber den Führungen 11 verhindert werden kann und gleichzeitig eine günstige Biegemomentübertragung sichergestellt wird. Genauso ist es daher selbstverständlich möglich drei oder mehr Anschlussabschnitte 16 je Führung 11 auf der Radaufhängungsvorrichtung 8 vorzusehen.

Bei der Ausführungsform gemäß den Fig. 5 bis 7, am deutlichsten ersichtlich in Fig. 7, weist jede Radaufhängungsvorrichtung 8 beidseits der Achse 7 - in Fahrtrichtung gesehen - jeweils zwei abstehende, in Höhenrichtung übereinanderliegende Arme 18 auf, an deren Enden die Anschlussabschnitte 16, welche die als Stange ausgebildete Führung 11 umgreifen, vorgesehen sind.

Das erfindungsgemäße Lastenfahrzeug 1 kann aus jeglichen bekannten Materialien gefertigt sein. Es empfiehlt sich eine modulare Bauweise aus jeweils selbsttragenden Elementen, z.B. Hartschaumplatten, um die Fahrzeuggröße, d.h. das Ladevolumen, den jeweiligen Bedürfnissen anpassen zu können, ohne grundlegende Konstruktionselemente ändern zu müssen (bei einem Lastenfahrrad z.B. das Ladevolumen auf 3 m³ und die Nutzlast auf 500 kg zu erhöhen). Jeder Radkasten 9 samt Radaufhängungsvorrichtung 8 und Hinterrad 5 kann einfach an der Seite des Fahrzeugrahmens 6 oder dem Aufbau 4 montiert sein. Jeder Radkasten 9 kann z.B. aus CNCgelaserten und verschweißten Stahlblechstücken oder aus gebogenen Stahlblechen gefertigt sein. Jede Radaufhängungsvorrichtung 8 kann z.B. aus zugeschnittenem Stahlblech bestehen oder ein Aluminium-Gussteil sein, je nach Größe und Anforderung an die Festigkeit.

Dadurch, dass jedes Hinterrad auf einer separaten Achse 7, also nicht auf einer zwischen beiden Hinterrädern durchgehenden Achse 7, gelagert ist, kann der Ladebereiche 4 im Bedarfsfall tiefer als bisher möglich, nämlich bis zum Boden, abgesenkt werden. Überdies kann die Bodenfläche des Ladebereiches 4 tiefer als bisher liegen, sodass sich der Schwerpunkt von Ladegütern auf möglichst geringer Höhe befindet, was zu einer Steigerung der Stabilität des Lastenfahrzeugs 1 beiträgt. Ein weiterer positiver Aspekt lieg darin, dass bei gleicher Höhe des Ladebereichs 4 mehr Ladevolumen zur Verfügung steht.

Dadurch, dass sich das Radaufhängungssystem 19 jedes Hinterrads 5 in Längsrichtung des Lastenfahrzeugs 1 erstreckt und die Radaufhängungsvorrichtung 19 - in Fahrtrichtung gesehen - vor und hinter dem Hinterrad 5 durch eine höhenverstellbare Kombination aus Feder-Dämpfer System 10 und Führung 11 abgestützt ist, jedes Hinterrad 5 also linear geführt ist, werden die auftretenden Momente stark reduziert und in weiterer Folge kann die Breite des Radkastens wesentlich geringer sein, als dies bislang bei herkömmlichen Radaufhängungssystemen der Fall war.

Die Kombination aus Feder-Dämpfer-System 10 und Führung 11 wird, wie in Fig. 1 bis 11 dargestellt, durch ein separate Feder-Dämpfer-System 10 und eine separate Führung 11 gebildet, wobei der Radkasten 9 eine Vorder- und eine Hinterseite - in Fahrtrichtung gesehen - sowie eine Oberseite aufweist und jede Führung 11 an der Vorder- bzw. Hinterseite befestigt sowie jeder Stoßdämpfer an der Oberseite abgestützt ist. Die vom Feder-Dämpfer-System 10 unabhängige Führung 11 des Radaufhängungssystems 19 gewährleistet eine bessere, stabilere Straßenlage als jene beim Einsatz von Teleskopdämpfern.

Es ist von Vorteil, die Kombinationen von Feder-Dämpfer-System 10 und Führung 11 im Wesentlichen fluchtend mit dem Hinterrad 5 anzuordnen, um einerseits eine optimale Radabstützung zu gewährleisten und anderseits einen möglichst schmalen Radkasten zu erhalten. Dabei kann die Führung 11 - quer zur Fahrtrichtung gesehen - neben dem zugehörigen Feder-Dämpfer-System 10 nächst dem Ladebereich 4 angeordnet sein (siehe Fig. 1 bis 4) oder - in Fahrtrichtung gesehen - auf der dem Hinterrad 5 abgekehrten Seite des zugehörigen Feder-Dämpfer-Systems 10 angeordnet sein (siehe Fig. 5 bis 7). Die erstgenannte Variante kann bei eher niedrigen Nutzlasten (z.B. bis 500 kg Gesamtgewicht) eingesetzt werden, bei denen Feder-Dämpfer-Systeme mit relativ geringen Durchmessern ausreichen. Die zweitgenannte Variante empfiehlt sich bei höheren Nutzlasten (z.B. 1 Tonne Gesamtgewicht), da die Feder-Dämpfer-Systeme einen größeren Durchmesser erfordern. Denn in jedem Fall soll der Radkasten 9 möglichst schmal sein, damit die lichte Weite des Ladebereichs möglichst groß ist. Aufgrund der knappen Platzverhältnisse ist es für die Fachperson offensichtlich, dass der Radkasten 9 auch ein integraler Bestandteil des Fahrzeugs sein kann und nicht als separates Bauteil vorliegen muss.

Als separate Führung 11 für das Radaufhängungssystems 19 kommt jegliches lineare Gebilde in Frage, mit dem das Radaufhängungssystems 19 längsverschiebbar verbunden werden kann. Die einfachste Lösung ist die, wenn jede Führung 11 als Stange ausgebildet ist und das Radaufhängungssystems 19 für jede Führung 11 wenigstens einen Anschlussabschnitt 16 aufweist, der die Stange ringförmig umgreift. Eine Alternative dazu besteht darin, dass jede Führung 11, als Profilschiene mit hinterschnittener Nut ausgebildet ist und das Radaufhängungssystems 19 für jede Führung wenigstens einen Anschlussabschnitt aufweist, der dem Nutenprofil angepasst ist. Jede der sich in Längsrichtung des Lastenfahrzeugs erstreckenden das Radaufhängungsvorrichtung 8 kann vorteilhafterweise als gegebenenfalls mit Ausnehmungen versehene, flache Platte ausgeführt sein, die an ihrer oberhalb der Achse 7 befindlichen Längsseite mit einer Verstärkungsrippe 17 versehen ist und an ihrer Vorder- und Hinterseite - in Fahrtrichtung gesehen - wenigstens je einen Anschlussabschnitt 16 aufweist. Die Verstärkungsrippe 17 dient dabei zur Aufnahme von Biegebelastungen und trägt damit zur Stabilität des Radaufhängungssystems 19 bei.

Als Alternative zur vorstehend umrissenen Bauweise der Radaufhängungsvorrichtung 8 hat es sich bewährt, wenn jede Radaufhängungsvorrichtung 8 beidseits der Achse 7 - in Fahrtrichtung gesehen - jeweils zwei abstehende, in Höhenrichtung übereinanderliegende Arme 18 aufweist, an deren Enden die Anschlussabschnitte 16 ausgebildet sind. Diese Ausgestaltung bedingt einen geringeren Materialbedarf, was aber gegenüber der vorerwähnten Bauweise durch entsprechend angepasste Materialgüte zu kompensieren ist.

Die Höhenverstellbarkeit des Radaufhängungssystems 19 kann auf verschiedenste herkömmliche Weisen gewährleistet sein. Bevorzugt sind jedoch in bekannter Weise betätigbare (hydraulisch, elektrisch, pneumatisch, ...) Kolben-Zylinder-Einheiten.

Wie der Fachperson bekannt ist, fungiert die Feder-Dämpfer-Einheit 10 als Stoßdämpfer. Es ist darüber hinaus auch möglich die Kolben-Zylindereinheit 12 so auszuführen, dass diese während der Fahrt als mechanischer Dämpfer (im Sinne einer Energiedissipation) fungiert und die Feder-Dämpfer-Einheit 10 durch ein reines Federelement ersetzt wird.

Zusammengefasst lässt sich sagen, dass die Erfindung ein Radaufhängungssystems 19 und ein damit ausgestattetes Lastenfahrzeug 1 betrifft. Das Lastenfahrzeug 1 weist daher mit einen vorderseitigen Lenkbereich 2 und ein bis zwei Vorderräder 3 sowie einen hinterseitigen Ladebereich 4 und zwei Hinterrädern 5 auf, die von einen Fahrzeugrahmen 6 getragen sind, wobei jedes Hinterrad 5 auf einer separaten, in einer sich in Längsrichtung des Lastenfahrzeugs 1 erstreckenden Radaufhängungsvorrichtung 8 vorgesehenen und vom Ladebereich 4 nach außen abstehenden Achse 7 gelagert ist, wobei die Radaufhängungsvorrichtung 8 in einem am Fahrzeugrahmen 6 befestigten Radkasten 9 durch mindestens eine jeweils vor und hinter dem Hinterrad 5 - in Fahrtrichtung gesehen - vorgesehene Kombination aus Feder-Dämpfer-Einheit 10 und Führung 11 höhenverstellbar untergebracht ist.

Das Lastenfahrzeug 1 kann so ausgestaltet sein, dass die Kombination aus Feder-Dämpfer-System 10 und Führung 11 durch ein separates Feder-Dämpfer-Einheit 10 und eine separate Führung 11 gebildet ist, wobei der Radkasten 9 eine Vorder- 13 und eine Hinterseite 14 - in Fahrtrichtung gesehen - sowie eine Oberseite 15 aufweist und jede Führung 11 an der Vorder- 13 bzw. Hinterseite 14 befestigt sowie jedes Feder-Dämpfer-Einheit 10 an der Oberseite 15 abgestützt ist. Dabei können die Kombinationen aus Feder-Dämpfer-Einheit 10 und Führung 11 im Wesentlichen fluchtend mit dem Hinterrad 5 angeordnet sein. Weiters kann die Führung 11 - quer zur Fahrtrichtung gesehen - neben dem zugehörigen Feder-Dämpfer-Einheit 10 nächst dem Ladebereich 4 angeordnet sein.

Es ist darüber hinaus möglich, dass die Führung 11 - in Fahrtrichtung gesehen - auf der dem Hinterrad 5 abgekehrten Seite der zugehörigen Feder-Dämpfer-Einheit 10 angeordnet ist. Weiters ist es möglich, dass jede Führung 11 als Stange ausgebildet ist und die Radaufhängung 8 für jede Führung 11 wenigstens einen Anschlussabschnitt 16 aufweist, der die Stange ringförmig umgreift. Jede Führung 11 kann aber auch als Profilschiene mit hinterschnittener Nut ausgebildet sein, wobei die Radaufhängungsvorrichtung 8 dann für jede Führung 11 wenigstens einen Anschlussabschnitt 16 aufweist, der dem Nutenprofil angepasst ist.

Jede Radaufhängungsvorrichtung 8 kann als gegebenenfalls mit Ausnehmungen versehene, flache Platte ausgeführt sein, die an ihrer oberhalb der Achse 7 befindlichen Längsseite mit einer Verstärkungsrippe 17 versehen ist und an ihrer Vorder- und Hinterseite - in Fahrtrichtung gesehen - wenigstens je einen Anschlussabschnitt 16 aufweist.

Darüber hinaus kann jede Radaufhängungsvorrichtung 8 so ausgestaltet sein, dass sie beidseits der Achse 7 - in Fahrtrichtung gesehen - jeweils zwei abstehende, in Höhenrichtung übereinanderliegende Arme 18 aufweist, an deren Enden die Anschlussabschnitte 16 ausgebildet sind.

Das Lastenfahrzeug 1 kann so ausgestaltet sein, dass die Höhenverstellbarkeit der Radaufhängungsvorrichtung 8 durch eine an jeder Feder-Dämpfer-Einheit 10 befestigte, im Radkasten 9 abgestützte Kolben-Zylinder-Einheit 12 gewährleistet ist.

**Bezugszeichen:**

| | | | | |
|---|---|---|---|---|
| 1 | Lastenfahrrad | 11 | Führung | |
| 2 | Lenkbereich | 12 | Kolben-Zylinder-Einheit | |
| 3 | Vorderrad | 13 | Vorderseite | 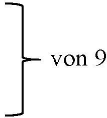 |
| 4 | Ladebereich | 14 | Hinterseite | |
| 5 | Hinterrad | 15 | Oberseite | |
| 6 | Fahrzeugrahmen | 16 | Anschlussabschnitt | |
| 7 | Achse | 17 | Verstärkungsrippe | |
| 8 | Radaufhängungsvorrichtung | 18 | Arm | |
| 9 | Radkasten | 19 | Radaufhängungssystem | |
| 10 | Feder-Dämpfer-Einheit | | | |

## Patentansprüche

1. Radaufhängungssystem (19) umfassend einen Radkasten (9), wobei der Radkasten (9) eine Vorderseite (13), eine Hinterseite (14) und eine Oberseite (15) umfasst, eine Radaufhängungsvorrichtung (8), für die Aufnahme einer Radachse (7), wobei die Radaufhängungsvorrichtung (8) zumindest zwei Anschlussabschnitte (16) umfasst, zumindest zwei Führungen (11), wobei die Führungen (11) mit dem Radkasten (9) verbunden sind, zumindest zwei Feder-Dämpfer-Einheiten (10), zumindest zwei Kolben-Zylinder-Einheiten (12), wobei zumindest je eine Führung (11), je eine Feder-Dämpfer-Einheiten (10) und je eine Kolben-Zylinder-Einheit (12) sich an zwei gegenüberliegenden Enden der Radaufhängungsvorrichtung (8) befinden und mit dieser verbunden sind, **dadurch gekennzeichnet, dass** die Führungen (11) einstückig ausgeführt sind und je zumindest eine Feder-Dämpfer-Einheit (10) und zumindest eine Kolben-Zylinder-Einheiten (12) parallel zu je einer Führung (11) in Serie zueinander geschalten sind, also in axialer Richtung aneinander anschließen und die sich aus Feder-Dämpfer-Einheit (10) und Kolben-Zylinder-Einheiten (12) ergebende Einheit an einem Ende mit dem Radkasten (9) und am anderen Ende mit der Radaufhängungsvorrichtung (8) verbunden ist und sich jeweils zumindest einen der Anschlussabschnitte (16) mit einer Führung (11) in Eingriff befinden.

2. Radaufhängungssystem (19) gemäß Anspruch 1, **dadurch gekennzeichnet, dass** die Kolben-Zylinder-Einheit (12) höhenverstellbar ausgebildet ist.

3. Radaufhängungssystem (19) gemäß Anspruch 1 oder 2, **dadurch gekennzeichnet, dass** Kombination aus Feder-Dämpfer-Einheit (10) und Führung (11) durch eine separate Feder-Dämpfer-Einheit (10) und eine separate Führung (11) gebildet ist.

4. Radaufhängungssystem (19) gemäß Anspruch 1 bis 3, **dadurch gekennzeichnet, dass** jede Führung (11) an der Vorder- (13) bzw. Hinterseite (14) befestigt sowie jede Kolben-Zylinder-Einheit (12) an der Oberseite (15) des Radkastens (9) abgestützt ist.

5. Radaufhängungssystem (19) gemäß Anspruch 1 bis 4, **dadurch gekennzeichnet, dass** jede Feder-Dämpfer-Einheit (10) an der Vorder- (13) bzw. Hinterseite (14) des Radkastens (9) abgestützt ist.

6. Radaufhängungssystem (19) gemäß Anspruch 1 bis 5, **dadurch gekennzeichnet, dass** die Kombinationen aus Feder-Dämpfer-Einheit (10) und Führung (11) im Wesentlichen fluchtend mit einem auf der Achse 7 angebrachten Hinterrad (5) angeordnet sind.

7. Radaufhängungssystem (19) gemäß Anspruch 1 bis 6, **dadurch gekennzeichnet, dass** die Führung (11), bei Blick auf die Achse (7), neben der zugehörigen Feder-Dämpfer-Einheit (10) angeordnet ist.

8. Radaufhängungssystem (19) gemäß Anspruch 1 bis 6, **dadurch gekennzeichnet, dass** die Führung (11), bei Blick auf die Achse (7), hinter der zugehörigen Feder-Dämpfer-Einheit (10) angeordnet ist.

9. Radaufhängungssystem (19) gemäß Anspruch 1 bis 8, **dadurch gekennzeichnet, dass** jede Führung (11) als Stange mit kreisförmigem Querschnitt ausgebildet ist und die Radaufhängung (8) für jede Führung (11) wenigstens einen Anschlussabschnitt (16) aufweist, der sie Stange ringförmig umgreift.

10. Radaufhängungssystem (19) gemäß Anspruch 1 bis 8, **dadurch gekennzeichnet, dass** jede Führung (11) als Profilschiene mit hinterschnittener Nut ausgebildet ist und die Radaufhängungsvorrichtung (8) für jede Führung (11) wenigstens einen Anschlussabschnitt (16) aufweist, der dem Nutenprofil angepasst ist.

11. Radaufhängungssystem (19) gemäß Anspruch 1 bis 9, **dadurch gekennzeichnet, dass** jede Radaufhängungsvorrichtung (8) als flache Platte ausgeführt ist, die bevorzugt Ausnehmungen aufweist.

12. Radaufhängungssystem (19) gemäß Anspruch 1 bis 11, **dadurch gekennzeichnet, dass** Radaufhängungsvorrichtung (8) Verstärkungsrippe (17) aufweist.

13. Radaufhängungssystem (19) gemäß Anspruch 1 bis 12, **dadurch gekennzeichnet, dass** jede Radaufhängung (8) beidseits der Achse (7) jeweils zwei abstehende, in Höhenrichtung übereinanderliegende Arme (18) aufweist, an deren Enden die Anschlussabschnitte (16) ausgebildet sind.

14. Radaufhängungssystem (19) gemäß Anspruch 1 bis 13, **dadurch gekennzeichnet, dass** jede Radaufhängung (8) beidseits der Achse (7) jeweils zumindest zwei Anschlussabschnitte (16) aufweist.

15. Lastenfahrzeug (1), umfassend einen Ladebereich (4) und zumindest zwei Hinterräder (5) **dadurch gekennzeichnet, dass** das Lastenfahrzeug (1) ein Radaufhängungssystem (19) gemäß einem der Ansprüche 1 bis 14 aufweist.
